(19) Europäisches Patentamt
European Patent Office
Office européen des brevets

(11) EP 4 480 971 A1

(12) **EUROPEAN PATENT APPLICATION**
published in accordance with Art. 153(4) EPC

(43) Date of publication:
**25.12.2024 Bulletin 2024/52**

(21) Application number: **23756620.3**

(22) Date of filing: **15.02.2023**

(51) International Patent Classification (IPC):
***C08F 36/04*** *(2006.01)* ***C08F 4/54*** *(2006.01)*
***C08F 2/38*** *(2006.01)*

(52) Cooperative Patent Classification (CPC):
**C08F 2/38; C08F 4/54; C08F 36/04**

(86) International application number:
**PCT/KR2023/002198**

(87) International publication number:
**WO 2023/158208 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.02.2022 KR 20220021074**

(71) Applicant: **LG Chem, Ltd.**
**Yeongdeungpo-gu**
**Seoul 07336 (KR)**

(72) Inventors:
- **LEE, Tae Chul**
  **Daejeon 34122 (KR)**
- **BAE, Ju Ryang**
  **Daejeon 34122 (KR)**
- **CHOI, Seo Won**
  **Daejeon 34122 (KR)**
- **SOHN, Hae Sung**
  **Daejeon 34122 (KR)**
- **KANG, Suk Youn**
  **Daejeon 34122 (KR)**
- **PARK, Sung Ho**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PREPARING CATALYST COMPOSITION AND METHOD FOR PREPARING CONJUGATED DIENE POLYMER**

(57) The present invention relates to a method for preparing a catalyst composition for preparing a catalyst composition having improved catalyst activity by pretreating a hydrogen-bonded lanthanide rare earth element compound and/or an oligomer type of a lanthanide rare earth element compound , which induce the deterioration of the catalyst activity, and a method for preparing a conjugated diene-based polymer using the catalyst composition prepared thereby.

EP 4 480 971 A1

## Description

## TECHNICAL FIELD

[Cross-reference to Related Applications]

The present application claims the benefit of priority based on Korean Patent Application No. 10-2022-0021074, filed on February 17, 2022, the entire contents of which are incorporated herein by reference.

[Technical Field]

The present invention relates to a method for preparing a catalyst composition for preparing a conjugated diene-based polymer, and a method for preparing a conjugated diene-based polymer using the same.

## BACKGROUND ART

Recently, according to the growing attention on saving energy and environmental issues, the decrease of the fuel consumption ratio of cars is required. As a method for accomplishing the requirement, a method for decreasing the molecular weight distribution, while increasing the cis bond content and linearity of polybutadiene in a rubber composition for forming tires has been suggested.

Polybutadiene may be prepared using a Ziegler-Natta catalyst, and the Ziegler-Natta catalyst is prepared by activating an organic acid metal compound with an alkyl aluminum and an alkyl aluminum halide compound, and the catalyst prepared is reacted with a 1,3-butadiene monomer to prepare polybutadiene.

Here, the organic acid metal compound includes titanium-based, nickel-based, cobalt-based and lanthanum-based compounds, and lanthanide rare earth element compounds are mainly used in view of increasing the cis bond content and linearity and decreasing the molecular weight distribution of polybutadiene.

The examples of the lanthanide rare earth element compound include neodymium-based compounds, particularly, neodymium versatate (NdV). The lanthanide rare earth element compound may be activated through alkylation using an alkyl aluminum compound, and then, through halogenations using an alkyl aluminum halide compound, and in order to stabilize a catalyst, a 1,3-butadiene monomer may be injected during the alkylation for performing.

In this case, the lanthanide rare earth element compound such as NdV is not present as a single compound type but is present as a hydrogen-bonded type and/or an oligomer type by humidity and an aliphatic compound used during a preparation process (Non-patent Document 1 and Non-patent Document 2). However, if alkylation is performed with respect to the hydrogen-bonded lanthanide rare earth element compound and/or the oligomer type of the lanthanide rare earth element compound right away, the alkylation takes long time when compared to a case where the lanthanide rare earth element compound is present as a single compound, and there are problems in that the alkylation is insufficiently performed. If such a lanthanide rare earth element compound that has been insufficiently undergone the alkylation is injected into a halogenation reactor for performing the halogenation, it may be a factor of deteriorating catalyst activity and may arise issues of increasing the contamination of a catalyst preparation apparatus.

US Registration Patent Publication No. 9056303 (Patent Document 1) discloses a method for manufacturing a catalyst system using multiple alkylation reactors. In case of continuously preparing in order to solve defects during manufacturing a catalyst system in a batch mode, Patent Document 1 particularly specifies the type of reactors, and controlling the output flux of the catalyst system in a line outlet to a required degree to remain in a suitable residual time range for alkylation and chlorination so as to prevent the formation of gel in the reactor and to secure the flexibility of the salt of an alkylating agent and a rare earth element, which may influence the degree of catalyst activity. In addition, Japanese Registration Patent Publication No. 5072191 (Patent Document 2) discloses a method for preparing a catalyst for polymerizing a conjugated diene, including injecting an alkyl aluminum compound and an alkyl aluminum hydride in order. However, in Patent Documents 1 and 2, only alkylation reaction is directly performed with respect to a lanthanide compound during preparing a catalyst system and a catalyst for polymerizing a conjugated diene, but the type of the lanthanide compound injected and influence on catalyst activity thereby are not recognized.

[Prior Art Documents]

[Patent Documents]

(Patent Document 1) US 9056303 B2

(Patent Document 2) JP 5072191 B2

[Non-patent Documents]

(Non-patent Document 1) "A Highly Reactive and Monomeric Neodymium Catalyst", Macromolecules 2002, 35, 13, 4875-4879 (https://doi.org/10.1021/ma012123p)
(Non-patent Document 2) "Living and non-living Ziegler-Natta catalysts: electronic properties of active site", Polymer, Volume 44, Issue 21, October 2003, Pages 6555-6558 (https://doi.org/10.1016/S0032-3861(03)00698-0)

## DISCLOSURE OF THE INVENTION

### TECHNICAL PROBLEM

The task for solving in the present invention is to improve catalyst activity in preparing a catalyst composition for polymerizing polybutadiene, by pre-treating a hydrogen-bonded lanthanide rare earth element compound and/or an oligomer type of a lanthanide rare earth element compound, which induce the deterioration of the catalyst activity, prior to alkylation.
That is, in order to solve the defects described in the background art of the invention, an object of the present invention is to provide a method for preparing a catalyst composition having improved catalyst activity by pre-treating in advance a hydrogen-bonded lanthanide rare earth element compound and/or an oligomer type of a lanthanide rare earth element compound, which induce the deterioration of the catalyst activity.
In addition, another object of the present invention is to provide a method for preparing a conjugated diene-based polymer having high cis bond content and linearity and narrow molecular weight distribution by using the catalyst composition prepared by the method for preparing a catalyst composition above.

### TECHNICAL SOLUTION

To solve the above-described tasks, the present invention provides a method for preparing a catalyst composition and a method for preparing a conjugated diene-based polymer.

(1) The present invention provides a method for preparing a catalyst composition, comprising: a step of performing pre-treatment reaction of a hydrogen bond, an oligomer type, or a combination thereof on a lanthanide rare earth element compound (S10); a step of alkylation of mixing and reacting the lanthanide rare earth element compound of which the hydrogen bond, the oligomer type, or the combination thereof is pre-treated in step (S10), with an alkylating agent (S20); and a step of halogenation of mixing and reacting the alkylated lanthanide rare earth element compound in step (S20), with a halogen compound (S30).
(2) The present invention provides the method for preparing a catalyst composition according to (1), wherein the step (S10) is performed by mixing and reacting the lanthanide rare earth element compound, with one or more trialkyl aluminums selected from the group consisting of trimethyl aluminum and triethyl aluminum.
(3) The present invention provides the method for preparing a catalyst composition according to (2), wherein the step (S10) is performed before the alkylation of the lanthanide rare earth element compound by the trialkyl aluminum occurs.
(4) The present invention provides the method for preparing a catalyst composition according to any one among (1) to (3), wherein the lanthanide rare earth element compound is a neodymium compound represented by Formula 1.

[Formula 1]

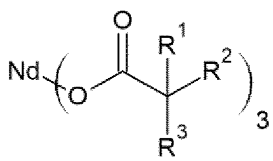

In Formula 1, $R^1$ to $R^3$ are each independently hydrogen or an alkyl group of 1 to 12 carbon atoms, where $R^1$ to $R^3$ are not all hydrogen.

(5) The present invention provides the method for preparing a catalyst composition according to any one among (1) to (4), wherein the lanthanide rare earth element is one or more selected from the group consisting of Nd(2-ethyl hexanoate)$_3$, Nd(2,2-dimethyl decanoate)$_3$, Nd(2,2-diethyl decanoate)$_3$, Nd(2,2-dipropyl decanoate)$_3$, Nd(2,2-dibutyl decanoate)$_3$, Nd(2,2-dihexyl decanoate)$_3$, Nd(2,2-dioctyl decanoate)$_3$, Nd(2-ethyl-2-propyl decanoate)$_3$, Nd(2-ethyl-2-butyl decanoate)$_3$, Nd(2-ethyl-2-hexyl decanoate)$_3$, Nd(2-propyl-2-butyl decanoate)$_3$, Nd(2-propyl-2-hexyl decanoate)$_3$, Nd(2-propyl-2-isopropyl decanoate)$_3$, Nd(2-butyl-2-hexyl decanoate)$_3$, Nd(2-hexyl-2-octyl decanoate)$_3$, Nd(2,2-diethyl octanoate)$_3$, Nd(2,2-dipropyl octanoate)$_3$, Nd(2,2-dibutyl octanoate)$_3$, Nd(2,2-dihexyl octanoate)$_3$, Nd(2-ethyl-2-propyl octanoate)$_3$, Nd(2-ethyl-2-hexyl octanoate)$_3$, Nd(2,2-diethyl nonanoate)$_3$, Nd(2,2-dipropyl nonanoate)$_3$, Nd(2,2-dibutyl nonanoate)$_3$, Nd(2,2-dihexyl nonanoate)$_3$, Nd(2-ethyl-2-propyl nonanoate)$_3$, and Nd(2-ethyl-2-hexyl nonanoate)$_3$.

(6) The present invention provides the method for preparing a catalyst composition according to any one among (1) to (5), wherein the alkylating agent is an alkyl aluminum compound represented by Formula 2.

[Formula 2] $AlR^4R^5R^6$

In Formula 2, $R^4$ to $R^6$ are each independently hydrogen or an alkyl group of 1 to 12 carbon atoms, where $R^4$ to $R^6$ are not all hydrogen, and if all of $R^4$ to $R^6$ are alkyl groups, the carbon number of the alkyl group is 3 to 12.

(7) The present invention provides the method for preparing a catalyst composition according to any one among (1) to (6), wherein the alkylating agent is a dialkyl aluminum hydride.

(8) The present invention provides the method for preparing a catalyst composition according to any one among (1) to (7), wherein the pre-treatment reaction in the step (S10), the alkylation in the step (S20), or the pre-treatment reaction in the step (S10) and the alkylation in the step (S20) are performed by including a conjugated diene-based monomer.

(9) The present invention provides the method for preparing a catalyst composition according to any one among (1) to (8), wherein the halogen compound is one or more selected from the group consisting of an alkyl aluminum halide represented by Formula 3 and an alkyl aluminum sesquihalide represented by Formula 4.

[Formula 3] $AlR^7R^8R^9$

In Formula 3, $R^7$ to $R^9$ are each independently a halogen group or an alkyl group of 1 to 12 carbon atoms, where $R^7$ to $R^9$ are not all halogen groups.

[Formula 4]

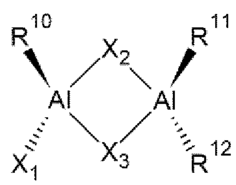

In Formula 4, $R^{10}$ to $R^{12}$ are each independently an alkyl group of 1 to 12 carbon atoms, and $X_1$ to $X_3$ are each independently a halogen group.

(10) The present invention provides the method for preparing a catalyst composition according to any one among (1) to (9), wherein the halogen compound is one or more selected from the group consisting of a dialkyl aluminum halide and an alkyl aluminum sesquihalide.

(11) The present invention provides a method for preparing a conjugated diene-based polymer, comprising a step of polymerizing a conjugated diene-based monomer in the presence of the catalyst composition prepared by the method for preparing a catalyst composition according to any one among (1) to (10), in a hydrocarbon solvent to prepare an active polymer (S100).

(12) The present invention provides a conjugated diene-based polymer prepared by the method for preparing a conjugated diene-based polymer according to (11).

(13) The present invention provides a rubber composition comprising the conjugated diene-based polymer according to (12).

## ADVANTAGEOUS EFFECTS

The catalyst composition prepared according to the method for preparing a catalyst composition of the present invention is prepared by pre-treating a hydrogen-bonded lanthanide rare earth element compound and/or an oligomer type

of a lanthanide rare earth element compound, which induce the deterioration of the catalyst activity, prior to alkylation, and has excellent catalyst activity.

The conjugated diene-based polymer prepared according to the method for preparing a conjugated diene-based polymer of the present invention has the low lanthanide rare earth element content remaining in the conjugated diene-based polymer, high cis bond content and linearity, and narrow molecular weight distribution, due to high catalyst activity, and if applied to a rubber composition, excellent abrasion resistance and a low fuel consumption ratio may be shown.

## BEST MODE FOR CARRYING OUT THE INVENTION

Hereinafter, the present invention will be described in more detail in order to assist the understanding of the present invention.

It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

### Method for preparing catalyst composition

The present invention provides a method for preparing a catalyst composition. The catalyst composition prepared by the method for preparing a catalyst composition may be a catalyst composition for polymerizing a conjugated diene-based polymer.

According to an embodiment of the present invention, the method for preparing a catalyst composition may include: a step of performing pre-treatment reaction of a hydrogen bond, an oligomer type, or a combination thereof on a lanthanide rare earth element compound (S10); a step of alkylation reaction of mixing and reacting the lanthanide rare earth element compound of which the hydrogen bond, the oligomer type, or the combination thereof is pre-treated in step (S10), with an alkylating agent (S20); and a step of halogenation of mixing and reacting the alkylated lanthanide rare earth element compound in step (S20), with a halogen compound (S30).

As described in the background art of the present invention, the lanthanide rare earth element compound is not present as a single compound type but is present as a hydrogen-bonded type and/or an oligomer type by humidity and an aliphatic compound used during a preparation process (see Non-patent Document 1 and Non-patent Document 2). However, if alkylation is performed with respect to the hydrogen-bonded lanthanide rare earth element compound and/or the oligomer type of the lanthanide rare earth element compound right away, the alkylation takes long time when compared to a case where the lanthanide rare earth element compound is present as a single compound, and there are problems in that the alkylation is insufficiently performed. If such a lanthanide rare earth element compound that has been insufficiently undergone the alkylation is injected into a halogenation reactor for performing the halogenation, it may be a factor of deteriorating catalyst activity and may arise issues of increasing the contamination of a catalyst preparation apparatus. However, in the method for preparing the catalyst composition according to the present invention, the hydrogen-bonded lanthanide rare earth element compound and/or the oligomer type of the lanthanide rare earth element compound are pre-treated prior to the alkylation according to the step (S10), and catalyst activity may be improved. Here, the pre-treatment may mean minimizing, further removing the hydrogen-bonded lanthanide rare earth element compound and/or the oligomer type of the lanthanide rare earth element compound, prior to alkylation.

According to an embodiment of the present invention, the step (S10) may be performed by mixing and reacting the lanthanide rare earth element compound with one or more trialkyl aluminums selected from the group consisting of trimethyl aluminum and triethyl aluminum. It is known that the trimethyl aluminum and the triethyl aluminum may be used as the alkylating agent of the alkylation. However, if the trimethyl aluminum and triethyl aluminum are not used for the pre-treatment of the step (S10) as in the present invention but are simply used as the alkylating agents, the lanthanide rare earth element compound may be led only to the alkylation according to the purpose, and this requires long time for the alkylation and induces defects of insufficient progress of the alkylation. In this respect, the step (S10) may be performed until a point just before arising the alkylation by one or more trialkyl aluminums selected from the group consisting of trimethyl aluminum and triethyl aluminum with respect to the lanthanide rare earth element compound. Meanwhile, trialkyl aluminum and/or dialkyl aluminum hydride, which may be used as alkylating agents other than the trimethyl aluminum and the triethyl aluminum, may insufficiently induce the pre-treatment of the hydrogen bond, the oligomer type, or the combination thereof with respect to the lanthanide rare earth element compound, and may be unsuitable as the trialkyl aluminum compound for the pre-treatment of the step (S10).

According to an embodiment of the present invention, the step (S10) may be performed by injecting one or more trialkyl aluminums selected from the group consisting of trimethyl aluminum and triethyl aluminum in 1 mol or more, 2 mol or more, 3 mol or more, 4 mol or more, 5 mol or more, 6 mol or more, 7 mol or more, 8 mol or more, 9 mol or more, or 10 mol or more, and 20 mol or less, 19 mol or less, 18 mol or less, 17 mol or less, 16 mol or less, 15 mol or less, 14 mol or less, 13 mol

or less, 12 mol or less, 11 mol or less, or 10 mol or less with respect to 1 mol of the lanthanide rare earth element compound.

According to an embodiment of the present invention, the step (S10) may be performed at a temperature of -20°C or more, -15°C or more, or -10°C or more, and at a temperature of 40°C or less, 35°C or less, 30°C or less, 25°C or less, or 20°C or less.

According to an embodiment of the present invention, the step (S10) may be performed for 10 minutes or more, 15 minutes or more, 20 minutes or more, 25 minutes or more, or 30 minutes or more, and 1 hour or less, 50 minutes or less, 40 minutes or less, or 30 minutes or less.

According to an embodiment of the present invention, by controlling the molar ratio, reaction temperature and reaction time of the lanthanide rare earth element compound with one or more trialkyl aluminums selected from the group consisting of trimethyl aluminum and triethyl aluminum, the efficiency of the pre-treatment of the hydrogen bond, the oligomer type or the combination thereof on the lanthanide rare earth element compound in the step (S10) may be improved even further.

According to an embodiment of the present invention, the lanthanide rare earth element compound may be a neodymium compound, particularly, neodymium carboxylates (for example, neodymium acetate, neodymium acrylate, neodymium methacrylate, neodymium gluconate, neodymium citrate, neodymium fumarate, neodymium lactate, neodymium maleate, neodymium oxalate, neodymium 2-ethylhexanoate, neodymium neodecanoate, etc.); organic phosphates (for example, neodymium dibutyl phosphate, neodymium dipentyl phosphate, neodymium dihexyl phosphate, neodymium diheptyl phosphate, neodymium dioctyl phosphate, neodymium bis (1-methyl heptyl) phosphate, neodymium bis (2-ethylhexyl) phosphate, neodymium didecyl phosphate, etc.); organic phosphonates (for example, neodymium butyl phosphonate, neodymium pentyl phosphonate, neodymium hexyl phosphonate, neodymium heptyl phosphonate, neodymium octyl phosphonate, neodymium (1-methylheptyl) phosphonate, neodymium (2-ethylhexyl) phosphonate, neodymium decyl phosphonate, neodymium dodecyl phosphonate, neodymium octadecyl phosphonate, etc.); organic phosphinates (for example, neodymium butyl phosphinate, neodymium pentyl phosphinate, neodymium hexyl phosphinate, neodymium heptyl phosphinate, neodymium octyl phosphinate, neodymium (1-mthyl heptyl) phosphinate, neodymium (2-ethylhexyl) phosphinate, etc.); carbamates (for example, neodymium dimethyl carbamate, neodymium diethyl carbamate, neodymium diisopropyl carbamate, neodymium dibutyl carbamate, neodymium dibenzyl carbamate, etc.); dithio carbamates (for example, neodymium dimethyldithio carbamate, neodymium diethyldithio carbamate, deodymium diisopropyl dithio carbamate, neodymium dibutyldithio carbamate, etc.); xanthogenates (for example, neodymium methyl xanthogenate, neodymium ethyl xanthogenate, neodymium isopropyl xanthogenate, neodymium butyl xanthogenate, neodymium benzyl xanthogenate, etc.); β-diketonates (for example, neodymium acetylacetonate, neodymium trifluoroacetyl acetonate, neodymium hexafluoroacetyl acetonate, neodymium benzoyl acetonate, etc.); alkoxides or allyloxides (for example, neodymium methoxide, neodymium ethoxide, neodymium isopropoxide, neodymium phenoxide, neodymium nonyl phenoxide, etc.); halides or pseudo halides (neodymium fluoride, neodymium chloride, neodymium bromide, neodymium idodide, neodymium cyanide, neodymium cyanate, neodymium thiocyanate, neodymium azide, etc.); oxyhalides (for example, neodymium oxyfluoride, neodymium oxychloride, neodymium oxybromide, etc.); or organic neodymium compounds including one or more rare earth element-carbon bonds (for example, $Cp_3Ln$, $Cp_2LnR$, $Cp_2LnCl$, $CpLnCl_2$, CpLn (cyclooctatetraene), $(C_5Me_5)_2LnR$, $LnR_3$, $Ln(allyl)_3$, $Ln(allyl)_2Cl$, etc., where Ln is a rare earth metal element, and R is a hydrocarbyl group), etc., and may include any one or a mixture of two or more thereof.

According to an embodiment of the present invention, the lanthanide rare earth element compound may be a neodymium compound represented by Formula 1.

[Formula 1]

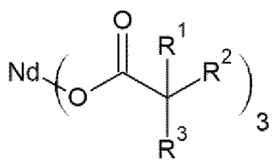

In Formula 1, $R^1$ to $R^3$ are each independently hydrogen or an alkyl group of 1 to 12 carbon atoms, where $R^1$ to $R^3$ may not be all hydrogen. In a particular embodiment, in Formula 1, $R^1$ may be an alkyl group of 4 to 12 carbon atoms, and $R^2$ and $R^3$ may be each independently hydrogen or an alkyl group of 1 to 8 carbon atoms, where $R^2$ and $R^3$ may not be all hydrogen. In a more particular embodiment, in Formula 1, $R^1$ may be an alkyl group of 6 to 8 carbon atoms, and $R^2$ and $R^3$ may be each independently hydrogen or an alkyl group of 2 to 6 carbon atoms, where $R^2$ and $R^3$ may not be all hydrogen.

According to an embodiment of the present invention, the lanthanide rare earth element compound may be one or more selected from the group consisting of Nd(2-ethyl hexanoate)$_3$ neodymium versatate, Nd(2,2-dimethyl decanoate)$_3$, Nd(2,2-diethyl decanoate)$_3$, Nd(2,2-dipropyl decanoate)$_3$, Nd(2,2-dibutyl decanoate)$_3$, Nd(2,2-dihexyl decanoate)$_3$, Nd(2,2-dioctyl decanoate)$_3$, Nd(2-ethyl-2-propyl decanoate)$_3$, Nd(2-ethyl-2-butyl decanoate)$_3$, Nd(2-ethyl-2-hexyl de-

canoate)$_3$, Nd(2-propyl-2-butyl decanoate)$_3$, Nd(2-propyl-2-hexyl decanoate)$_3$, Nd(2-propyl-2-isopropyl decanoate)$_3$, Nd(2-butyl-2-hexyl decanoate)$_3$, Nd(2-hexyl-2-octyl decanoate)$_3$, Nd(2,2-diethyl octanoate)$_3$, Nd(2,2-dipropyl octanoate)$_3$, Nd(2,2-dibutyl octanoate)$_3$, Nd(2,2-dihexyl octanoate)$_3$, Nd(2-ethyl-2-propyl octanoate)$_3$, Nd(2-ethyl-2-hexyl octanoate)$_3$, Nd(2,2-diethyl nonanoate)$_3$, Nd(2,2-dipropyl nonanoate)$_3$, Nd(2,2-dibutyl nonanoate)$_3$, Nd(2,2-dihexyl nonanoate)$_3$, Nd(2-ethyl-2-propyl nonanoate)$_3$ and Nd(2-ethyl-2-hexyl nonanoate)$_3$.

According to an embodiment of the present invention, the neodymium compound may include a carboxylate ligand including a substituent of an alkyl group with various lengths of 2 or more at an $\alpha$-position, and induce steric change around a neodymium central metal to block entanglement phenomenon among compounds. Accordingly, effects of restraining oligomerization may be achieved during the polymerization of a conjugated diene-based polymer using the catalyst composition. In addition, such a neodymium-based compound has high solubility in a solvent, and a neodymium ratio positioned at the center moiety, which has difficulty in conversion into a catalyst active species, is reduced, and thus, effects of achieving a high conversion ratio into the catalyst active species may be shown.

According to an embodiment of the present invention, the solubility of the neodymium compound may be about 60 parts by weight or more with respect to 100 parts by weight of a nonpolar solvent at room temperature (25°C). The solubility of the neodymium compound means the degree of dissolution clearly without turbid phenomenon, and by showing such a high solubility, excellent catalyst activity may be shown.

According to an embodiment of the present invention, the step (S10) may be performed by including a conjugated diene-based monomer. A conjugated diene-based monomer used in the polymerization of a conjugated diene-based polymer using the catalyst composition prepared according to the present invention, is mixed with the catalyst composition in advance to form a pre-polymerized preforming or premix catalyst composition, thereby improving the activity of the catalyst composition even further. In addition, an active polymer thus prepared may be stabilized. The "preforming" may mean that a small amount of a conjugated diene-based monomer such as 1,3-butadiene is added to reduce the production possibility of the diverse active species of the catalyst composition in a catalyst system, and pre-polymerization in the catalyst composition system is performed together with the addition of 1,3-butadiene. In addition, the "premix" may mean a uniformly mixed state of each of the compounds without undergoing polymerization in the catalyst composition system.

According to an embodiment of the present invention, the conjugated diene-based monomer that may be injected in the step (S10) may be 1,3-butadiene or derivatives thereof such as 1,3-butadiene, 2,3-dimethyl-1,3-butadiene, and 2-ethyl-1,3-butadiene, 2-methyl-1,3-pentadiene, 1,3-pentadiene, 3-methyl-1,3-pentadiene, 4-methyl-1,3-pentadiene, 1,3-hexadiene, 2,4-hexadiene, or the like.

According to an embodiment of the present invention, if the step (S10) is performed by including the conjugated diene-based monomer, the conjugated diene-based monomer may be injected in 1 mol or more, 5 mol or more, 10 mol or more, 15 mol or more, or 20 mol or more, and 100 mol or less, 90 mol or less, 80 mol or less, 70 mol or less, 60 mol or less, or 50 mol or less with respect to 1 mol of the lanthanide rare earth element compound.

According to an embodiment of the present invention, the step (S20) is a step for performing alkylation with respect to the lanthanide rare earth element compound, and may be performed by mixing and reacting the lanthanide rare earth element compound of which hydrogen bond, oligomer type or combination thereof is pre-treated, with an alkylating agent.

According to an embodiment of the present invention, the alkylating agent may be an organometal compound that may transfer a hydrocarbyl group to other metal and may play the role of a co-catalyst. The alkylating agent may be an organometal compound that is soluble in a polymer solvent and contains a metal-carbon bond, such as an organoaluminum compound, an organomagnesium compound and an organolithium compound.

According to an embodiment of the present invention, the alkylating agent may be an organoaluminum compound, particularly, alkyl aluminum such as tri-n-propyl aluminum, triisopropyl aluminum, tri-n-butyl aluminum, triisobutyl aluminum, tri-t-butyl aluminum, tripentyl aluminum, trihexyl aluminum, tricyclohexyl aluminum, and trioctyl aluminum; dihydrocarbylaluminum hydride such as diethylaluminum hydride, di-n-propylaluminum hydride, diisopropylaluminum hydride, din-butylaluminum hydride, diisobutylaluminum hydride (DIBAH), di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride and benzyl-n-octylaluminum hydride; hydrocarbylaluminum dihydride such as ethylaluminum dihydride, n-propylaluminum dihydride, isopropylaluminum dihydride, n-butylaluminum dihydride, isobutylaluminum dihydride, and n-octylaluminum dihydride.

According to an embodiment of the present invention, the alkylating agent may preferably be an alkyl aluminum compound in view of controlling the catalyst reaction and side reactions with regard to the lanthanide rare earth element compound of which hydrogen bond, oligomer type or combination thereof is pre-treated in the step (S10). In a particular embodiment, the alkylating agent may be an alkyl aluminum compound represented by Formula 2.

[Formula 2] $AlR^4R^5R^6$

In Formula 2, $R^4$ to $R^6$ are each independently hydrogen or an alkyl group of 1 to 12 carbon atoms, where $R^4$ to $R^6$ are not all hydrogen, and if all of $R^4$ to $R^6$ are alkyl groups, the carbon number of the alkyl group may be 3 to 12. In a particular embodiment, in Formula 2, $R^4$ to $R^6$ may be each independently hydrogen or an alkyl group of 3 to 8 carbon atoms, where $R^4$ to $R^6$ are not all hydrogen, and if all of $R^4$ to $R^6$ are alkyl groups, the carbon number of the alkyl group may be 3 to 6. In a more particular embodiment, in Formula 2, $R^4$ to $R^6$ may be each independently hydrogen or an alkyl group of 3 to 6 carbon atoms, where $R^4$ to $R^6$ may not be not all hydrogen.

According to an embodiment of the present invention, the alkylating agent may be a dialkyl aluminum hydride in view of controlling the catalyst reaction and side reactions with regard to the lanthanide rare earth element compound of which hydrogen bond, oligomer type or combination thereof is pre-treated in the step (S10), and the types of the dialkyl aluminum hydride are the same as shown above. In a particular embodiment, the alkylating agent may be diisobutyl aluminum hydride.

According to an embodiment of the present invention, the alkylating agent may include two or more alkyl aluminum compounds. In a particular embodiment, the alkylating agent may include two or more selected from the group consisting of a dialkyl aluminum hydride and a trialkyl aluminum. In a more particular embodiment, the alkylating agent may include one or more of the dialkyl aluminum hydride and one or more trialkyl aluminum. In a more particular embodiment, the alkylating agent may include diisobutyl aluminum hydride and triisobutyl aluminum.

According to an embodiment of the present invention, the step (S20) may be performed by injecting the alkylating agent in 1 mol or more, 2 mol or more, 3 mol or more, 4 mol or more, 5 mol or more, 6 mol or more, 7 mol or more, 8 mol or more, 9 mol or more, 10 mol or more, 11 mol or more, 12 mol or more, 13 mol or more, 14 mol or more, or 15 mol or more, and 30 mol or less, 29 mol or less, 28 mol or less, 27 mol or less, 26 mol or less, 25 mol or less, 24 mol or less, 23 mol or less, 22 mol or less, 21 mol or less, 20 mol or less, 19 mol or less, 18 mol or less, 17 mol or less, 16 mol or less, or 15 mol or less, with respect to 1 mol of the lanthanide rare earth element compound of which hydrogen bond, oligomer type or combination thereof is pre-treated in the step (S10).

According to an embodiment of the present invention, the step (S20) may be performed at a temperature of -20°C or more, -15°C or more, -10°C or more, or -5°C or more, and at a temperature of 40°C or less, 35°C or less, 30°C or less, 25°C or less, or 20°C or less.

According to an embodiment of the present invention, the step (S20) may be performed for 10 minutes or more, 15 minutes or more, 20 minutes or more, 25 minutes or more, or 30 minutes or more, and 2 hours or less, 1 hour and 30 minutes or less, 1 hour or less, 50 minutes or less, 40 minutes or less, or 30 minutes or less.

According to an embodiment of the present invention, by controlling the molar ratio, reaction temperature and reaction time of the lanthanide rare earth element compound of which hydrogen bond, oligomer type or combination thereof is pre-treated in the step (S10) with the alkylating agent, the catalyst activity may be improved even further.

According to an embodiment of the present invention, the step (S20) may be performed by including a conjugated diene-based monomer according to the same purpose in the step (S10). In this case, if the step (S20) is performed by including the conjugated diene-based monomer, the step (S20) may be performed by including the conjugated diene-based monomer separately from the step (S10) or simultaneously.

According to an embodiment of the present invention, if the step (S20) is performed by including the conjugated diene-based monomer, the conjugated diene-based monomer may be injected in 1 mol or more, 5 mol or more, 10 mol or more, 15 mol or more, or 20 mol or more, and injected in 100 mol or less, 90 mol or less, 80 mol or less, 70 mol or less, 60 mol or less, or 50 mol or less, with respect to 1 mol of the lanthanide rare earth element compound of which hydrogen bond, oligomer type, or combination thereof is pre-treated in the step (S10).

According to an embodiment of the present invention, the step (S30) is a step for performing halogenation with respect to the lanthanide rare earth element compound alkylated in the step (S20), and may be performed by mixing and reacting the lanthanide rare earth element compound alkylated in the step (S20) with a halogen compound.

According to an embodiment of the present invention, the halogen compound may be a diatomic halogen, an interhalogen compound, a hydrogen halide, an organic halide, a nonmetal halide, a metal halide, or an organometal halide, etc.

According to an embodiment of the present invention, the diatomic halogen may include fluorine, chlorine, bromine, or iodine.

According to an embodiment of the present invention, the interhalogen compound may include iodine monochloride, iodine monobromide, iodine trichloride, iodine pentafluoride, iodine monofluoride, iodine trifluoride, etc.

According to an embodiment of the present invention, the hydrogen halide may include hydrogen fluoride, hydrogen chloride, hydrogen bromide, or hydrogen iodide.

According to an embodiment of the present invention, the organic halide may include t-butyl chloride (t-BuCl), t-butyl bromide, allyl chloride, allyl bromide, benzyl chloride, benzyl bromide, chloro-di-phenylmethane, bromo-di-phenylmethane, triphenylmethyl chloride, triphenylmethyl bromide, benzylidene chloride, benzylidene bromide, methyltrichlorosilane, phenyltrichlorosilane, dimethyldichlorosilane, diphenyldichlorosilane, trimethylchlorosilane (TMSCl), benzoyl chloride, benzoyl bromide, propionyl chloride, propionyl bromide, methyl chloroformate, methyl bromoformate, iodomethane, diiodomethane, triiodomethane (also referred to as "iodoform"), tetraiodomethane, 1-iodopropane, 2-iodopropane, 1,3-diiodopropane, t-butyl iodide, 2,2-dimethyl-1-iodopropane (also referred to as "neopentyl iodide"), allyl iodide, iodobenzene, benzyl iodide, diphenylmethyl iodide, triphenylmethyl iodide, benzylidene iodide (also referred to as "benzal iodide"), trimethylsilyl iodide, triethylsilyl iodide, triphenylsilyl iodide, dimethyldiiodosilane, diethyldiiodosilane, diphenyldiiodosilane, methyltriiodosilane, ethyltriiodosilane, phenyltriiodosilane, benzoyl iodide, propionyl iodide, methyl iodoformate, or the like.

According to an embodiment of the present invention, the nonmetal halide may include phosphorus trichloride, phosphorus tribromide, phosphorus pentachloride, phosphorus oxychloride, phosphorus oxybromide, boron trifluoride, boron trichloride, boron tribromide, silicon tetrafluoride, silicon tetrachloride ($SiCl_4$), silicon tetrabromide, arsenic trichloride, arsenic tribromide, selenium tetrachloride, selenium tetrabromide, tellurium tetrachloride, tellurium tetrabromide, silicon tetraiodide, arsenic triiodide, tellurium tetraiodide, boron triiodide, phosphorus triiodide, phosphorus oxyiodide or selenium tetraiodide.

According to an embodiment of the present invention, the metal halide may include tin tetrachloride, tin tetrabromide, aluminum trichloride, aluminum tribromide, antimony trichloride, antimony pentachloride, antimony tribromide, aluminum trifluoride, gallium trichloride, gallium tribromide, gallium trifluoride, indium trichloride, indium tribromide, indium trifluoride, titanium tetrachloride, titanium tetrabromide, zinc dichloride, zinc dibromide, zinc difluoride, aluminum triiodide, gallium triiodide, indium triiodide, titanium tetraiodide, zinc diiodide, germanium tetraiodide, tin tetraiodide, tin diiodide, antimony triiodide or magnesium diiodide.

According to an embodiment of the present invention, the organometal halide may be alkyl aluminum halide or alkyl aluminum sesquihalide. In a particular embodiment, the organometal halide may include dimethylaluminum chloride, diethylaluminum chloride, dimethylaluminum bromide, diethylaluminum bromide, dimethylaluminum fluoride, diethylaluminum fluoride, methylaluminum dichloride, ethylaluminum dichloride, methylaluminum dibromide, ethylaluminum dibromide, methylaluminum difluoride, ethylaluminum difluoride, methylaluminum sesquichloride, ethylaluminum sesquichloride (EASC), isobutylaluminum sesquichloride, methylmagnesium chloride, methylmagnesium bromide, ethylmagnesium chloride, ethylmagnesium bromide, n-butylmagnesium chloride, n-butylmagnesium bromide, phenylmagnesium chloride, phenylmagnesium bromide, benzylmagnesium chloride, trimethyltin chloride, trimethyltin bromide, triethyltin chloride, triethyltin bromide, di-t-butyltin dichloride, di-t-butyltin dibromide, di-n-butyltin dichloride, di-n-butyltin dibromide, tri-n-butyltin chloride, tri-n-butyltin bromide, methylmagnesium iodide, dimethylaluminum iodide, diethylaluminum iodide, di-n-butylaluminum iodide, diisobutylaluminum iodide, di-n-octylaluminum iodide, methylaluminum diiodide, ethylaluminum diiodide, n-butylaluminum diiodide, isobutylaluminum diiodide, methylaluminum sesquiiodide, ethylaluminum sesquiiodide, isobutylaluminum sesquiiodide, ethylmagnesium iodide, n-butylmagnesium iodide, isobutylmagnesium iodide, phenylmagnesium iodide, benzylmagnesium iodide, trimethyltin iodide, triethyltin iodide, tri-n-butyltin iodide, di-n-butyltin diiodide, di-t-butyltin diiodide, or the like.

According to an embodiment of the present invention, the halogen compound may be one or more selected from the group consisting of an alkyl aluminum halide represented by Formula 3 and an alkyl aluminum sesquihalide represented by Formula 4, in view of improving catalyst activity and resulting reactivity.

[Formula 3] $AlR^7R^8R^9$

In Formula 3, $R^7$ to $R^9$ may be each independently a halogen group or an alkyl group of 1 to 12 carbon atoms, where $R^7$ to $R^9$ may not be all halogen groups. In a particular embodiment, in Formula 3, $R^7$ to $R^9$ may be each independently a halogen group or an alkyl group of 1 to 6 carbon atoms, where $R^7$ to $R^9$ may not be all halogen groups. In a more particular embodiment, in Formula 3, $R^7$ and $R^8$ may be each independently an alkyl group of 1 to 4 carbon atoms, and $R^9$ may be a halogen group.

[Formula 4]

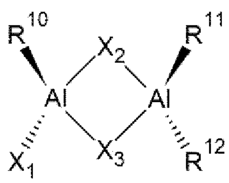

In Formula 4, $R^{10}$ to $R^{12}$ may be each independently an alkyl group of 1 to 12 carbon atoms, and $X_1$ to $X_3$ may be

each independently a halogen group. In a particular embodiment, in Formula 4, $R^{10}$ to $R^{12}$ may be each independently an alkyl group of 1 to 6 carbon atoms. In a more particular embodiment, in Formula 4, $R^{10}$ to $R^{12}$ may be each independently an alkyl group of 1 to 4 carbon atoms.

According to an embodiment of the present invention, the halogen compound may be one or more selected from the group consisting of a dialkyl aluminum halide and an alkyl aluminum sesquihalide in view of controlling the catalyst reaction and side reactions with regard to the lanthanide rare earth element compound of which hydrogen bond, oligomer type or combination thereof is pre-treated in the step (S10), and the types of the dialkyl aluminum halide and the alkyl aluminum sesquihalide are the same as described above. In a particular embodiment, the dialkyl aluminum halide may be diethyl aluminum chloride, and the alkyl aluminum sesquihalide may be ethyl aluminum sesquichloride.

According to an embodiment of the present invention, the step (S30) may be performed by injecting the halogen compound in 0.1 mol or more, 0.5 mol or more, 1.0 mol or more, 1.5 mol or more, 2.0 mol or more, 2.5 mol or more, or 3.0 mol or more, or by injecting 5.0 mol or less, 4.5 mol or less, 4.0 mol or less, 3.5 mol or less, or 3.0 mol or less with respect to 1 mol of the lanthanide rare earth element compound of which hydrogen bond, oligomer type or combination thereof is pre-treated in the step (S10).

According to an embodiment of the present invention, the step (S30) may be performed at a temperature of -20°C or more, -15°C or more, or -10°C or more, and at a temperature of 40°C or less, 35°C or less, 30°C or less, 25°C or less, or 20°C or less.

According to an embodiment of the present invention, the step (S30) may be performed for 10 minutes or more, 15 minutes or more, 20 minutes or more, 25 minutes or more, or 30 minutes or more, and 1 hour or less, 50 minutes or less, 40 minutes or less, or 30 minutes or less.

According to an embodiment of the present invention, by controlling the molar ratio, reaction temperature and reaction time of the lanthanide rare earth element compound of which hydrogen bond, oligomer type or combination thereof is pre-treated in the step (S10) with the alkylating agent, the catalyst activity may be improved even further in the step (S30) .

According to an embodiment of the present invention, the step (S10) to the step (S30) may be performed in an organic solvent. The organic solvent may be a nonpolar solvent having no reactivity with the constituent components of the catalyst composition. In a particular embodiment, the organic solvent may be linear, branched or cyclic aliphatic hydrocarbon of 5 to 20 carbon atoms such as n-pentane, n-hexane, n-heptane, n-octane, n-nonane, n-decane, isopentane, isohexane, isopentane, isooctane, 2,2-dimethylbutane, cyclopentane, cyclohexane, methylcyclopentane and methylcyclohexane; a mixture solvent of aliphatic hydrocarbon of 5 to 20 carbon atoms, such as petroleum ether, petroleum spirits, and kerosene; or an aromatic hydrocarbon-based solvent such as benzene, toluene, ethylbenzene, and xylene. In a more particular embodiment, the organic solvent may be the linear, branched or cyclic aliphatic hydrocarbon of 5 to 20 carbon atoms, or the mixture solvent of the aliphatic hydrocarbon, and preferably, n-hexane, cyclohexane, or a mixture thereof may be used.

According to an embodiment of the present invention, the step (S10) to the step (S30) may be performed in a batch type reactor. In addition, the step (S10) to the step (S30) may be performed by injecting the lanthanide rare earth element compound, trialkyl aluminum, alkylating agent and halogen compound in order according to each step.

According to an embodiment of the present invention, the total steps of the method for preparing the catalyst composition including the step (S10) to the step (S30) may be performed at a temperature of -20°C or more, -15°C or more, - 10°C or more, or -5°C or more, and at a temperature of 40°C or less, 35°C or less, 30°C or less, 25°C or less, 20°C or less, or 15°C or less.

According to an embodiment of the present invention, the total steps of the method for preparing the catalyst composition including the step (S10) to the step (S30) may be performed for 30 minutes or more, 35 minutes or more, 40 minutes or more, 45 minutes or more, 50 minutes or more, 55 minutes or more, 60 minutes or more, 65 minutes or more, or 70 minutes or more, and 2 hours or less, 1 hour and 50 minutes or less, 1 hour and 40 minutes or less, 1 hour and 30 minutes or less, 1 hour and 20 minutes or less, or 1 hour and 10 minutes or less.

## Method for preparing conjugated diene-based polymer

The present invention provides a method for preparing a conjugated diene-based polymer.

According to an embodiment of the present invention, the method for preparing the conjugated diene-based polymer may include a step or polymerizing a conjugated diene-based monomer in the presence of the catalyst composition prepared by the method for preparing a catalyst composition, in a hydrocarbon solvent to prepare an active polymer (S100).

According to an embodiment of the present invention, the conjugated diene-based monomer injectable in the step (S100) may be one or more selected from the group consisting of 1,3-butadiene, isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene, 2,4-hexadiene, or the like.

According to an embodiment of the present invention, the hydrocarbon solvent in the step (S100) may be one or more selected from the group consisting of n-pentane, n-hexane, n-heptane, isooctane, cyclohexane, toluene, benzene and xylene.

According to an embodiment of the present invention, the catalyst composition may be a catalyst composition prepared by the above-described method for preparing a catalyst composition, and the catalyst composition may use a neodymium compound in an amount of 0.03 mmol or more, 0.04 mmol or more, 0.05 mmol or more, or 0.06 mmol or more, and in an amount of 0.15 mmol or less, 0.14 mmol or less, 0.13 mmol or less, 0.12 mmol or less, 0.11 mmol or less, 0.10 mmol or less, 0.09 mmol or less, or 0.08 mmol or less with respect to total 100 g of the conjugated diene-based monomer.

According to an embodiment of the present invention, the polymerization in the step (S100) may be performed by continuous polymerization in a polymerization reactor including at least two reactors or in a batch type reactor. In addition, the polymerization may be polymerization with heating, isothermal polymerization, or polymerization at a constant temperature (adiabatic polymerization).

According to an embodiment of the present invention, the polymerization at a constant temperature may mean polymerization using self-generated heat of reaction without arbitrarily applying heat after injecting a catalyst composition, and the polymerization with heating may mean injecting a catalyst composition and then, increasing the temperature by arbitrarily applying heat. The isothermal polymerization may mean keeping the temperature of the reactants constant by increasing heat by applying heat or taking heat after adding a catalyst composition.

According to an embodiment of the present invention, the polymerization in the step (S100) may be performed by coordination anion polymerization, and polymerization environment may be bulk polymerization, solution polymerization, suspension polymerization or emulsion polymerization, particularly, solution polymerization.

According to an embodiment of the present invention, the polymerization in the step (S100) may be performed at a temperature of -20°C or more, -10°C or more, 0°C or more, 10°C or more, 20°C or more, 30°C or more, 40°C or more, 50°C or more, or 60°C or more, and 200°C or less, 150°C or less, 120°C or less, or 90°C or less. Within this range, the polymerization reaction may be controlled smooth, and the cis-1,4 bond content of the conjugated diene-based polymer thus produced may be secured.

According to an embodiment of the present invention, the polymerization of the step (S100) may be performed for 15 minutes or more, 20 minutes or more, 30 minutes or more, 40 minutes or more, 50 minutes or more, or 1 hour or more, and 3 hours or less, 2 hour and 30 minutes or less, or 2 hours or less.

According to an embodiment of the present invention, the conjugated diene-based polymer formed by the polymerization of the step (S100) may be an active polymer including an activated moiety by the catalyst composition.

According to an embodiment of the present invention, a step of reacting the active polymer with a modifier (S200) may be included. The modifier may be a known modifier that may be used during preparing a conjugated diene-based polymer using a catalyst composition including a lanthanide rare earth element compound.

According to an embodiment of the present invention, the method for preparing a conjugated diene-based polymer may include after preparing the active polymer, a step of finishing the polymerization by further using an additive such as a reaction quenching agent for finishing polymerization reaction, such as polyoxyethylene glycol phosphate, and an antioxidant such as 2,6-di-t-butylparacresol. In addition, additives generally serving easy solution polymerization, for example, additives such as a chelating agent, a dispersant, a pH controlling agent, a deoxidizer, and an oxygen scavenger may be selectively further used together with the reaction quenching agent.

## Conjugated diene-based polymer

The present invention provides a conjugated diene-based polymer.

According to an embodiment of the present invention, the conjugated diene-based polymer may be prepared by the method for preparing a conjugated diene-based polymer. That is, the conjugated diene-based polymer may be polymerized in the presence of the catalyst composition prepared by the above-described method for preparing a catalyst composition.

According to an embodiment of the present invention, the conjugated diene-based polymer may include a conjugated diene-based monomer unit. The conjugated diene-based monomer unit means a repeating unit formed by the polymerization of the conjugated diene-based monomer.

According to an embodiment of the present invention, the conjugated diene-based polymer may include 1,3-butadiene monomer unit in 80 wt% or more, 85 wt% or more, 90 wt% or more, 95 wt% or more, or 100 wt%, and selectively, 20 wt% or less, 15 wt% or less, 10 wt% or less, or 5 wt% or less of other conjugated diene-based monomers which are copolymerizable with 1,3-butadiene, and within the range, effects of preventing the reduction of the 1,4-cis bond content in a conjugated diene-based polymer may be achieved. The 1,3-butadiene monomer may be 1,3-butadiene or the derivatives thereof, including 1,3-butadiene, 2,3-dimethyl-1,3-butadiene, and 2-ethyl-1,3-butadiene, and as the other conjugated diene-based monomers which are copolymerizable with 1,3-butadiene, 2-methyl-1,3-pentadiene, 1,3-pentadiene, 3-methyl-1,3-pentadiene, 4-methyl-1,3-pentadiene, 1,3-hexadiene or 2,4-hexadiene may be used.

According to an embodiment of the present invention, the conjugated diene-based polymer may be a conjugated diene-based polymer catalyzed from a catalyst composition including a lanthanide rare earth element compound. That is, the conjugated diene-based polymer may be a conjugated diene-based polymer including an organometal moiety activated from a catalyst composition including a neodymium compound.

According to an embodiment of the present invention, the conjugated diene-based polymer may have a weight average molecular weight (Mw) of $1.0 \times 10^5$ g/mol or more, $2.0 \times 10^5$ g/mol or more, $3.0 \times 10^5$ g/mol or more, $4.0 \times 10^5$ g/mol or more, $5.0 \times 10^5$ g/mol or more, $6.0 \times 10^5$ g/mol or more, $7.0 \times 10^5$ g/mol or more, $8.0 \times 10^5$ g/mol or more, or $9.0 \times 10^5$ g/mol or more, and $1.0 \times 10^6$ g/mol or less, $9.0 \times 10^5$ g/mol or less, $8.0 \times 10^5$ g/mol or less, $7.0 \times 10^5$ g/mol or less, $6.0 \times 10^5$ g/mol or less, $5.0 \times 10^5$ g/mol or less, $4.0 \times 10^5$ g/mol or less, or $3.0 \times 10^5$ g/mol or less. In addition, the conjugated diene-based polymer may have a number average molecular weight (Mn) of $1.0 \times 10^5$ g/mol or more, $2.0 \times 10^5$ g/mol or more, $3.0 \times 10^5$ g/mol or more, $4.0 \times 10^5$ g/mol or more, or $5.0 \times 10^5$ g/mol or more, and $6.0 \times 10^5$ g/mol or less, $5.0 \times 10^5$ g/mol or less, $4.0 \times 10^5$ g/mol or less, $3.0 \times 10^5$ g/mol or less, $2.0 \times 10^5$ g/mol or less, or $1.0 \times 10^5$ g/mol or less. Within this range, if applied to a rubber composition, tensile properties are excellent, processability is excellent, and workability of a rubber composition is improved for easy mixing and kneading, and accordingly, excellent effects of the mechanical properties and the balance of physical properties of the rubber composition may be achieved.

According to an embodiment of the present invention, the conjugated diene-based polymer may have molecular weight distribution (Mw/Mn) of 1.0 or more, 1.5 or more, 2.0 or more, 2.1 or more, 2.2 or more, or 2.3 or more, and 4.0 or less, 3.5 or less, 3.0 or less, or 2.5 or less. The molecular weight distribution may be calculated from the ratio (Mw/Mn) of the weight average molecular weight (Mw) and the number average molecular weight (Mn). In this case, the number average molecular weight (Mn) is a common average of the molecular weights of individual polymers, which is obtained by measuring the molecular weights of n polymer chains, obtaining the total of the molecular weights, and dividing the total by n, and the weight average molecular weight (Mw) represents a polydispersity of a polymer composition. In addition, each of the weight average molecular weight and the number average molecular weight may mean a polystyrene converted molecular weight, analyzed by gel permeation chromatography (GPC).

According to an embodiment of the present invention, if the conjugated diene-based polymer satisfies the weight average molecular weight (Mn) and the number average molecular weight conditions simultaneously together with the molecular weight distribution, and if applied to a rubber composition, tensile properties, viscoelasticity and processability on the rubber composition may be excellent, and excellent effects of the balance among physical properties may be achieved.

According to an embodiment of the present invention, the conjugated diene-based polymer may have the cis-1,4 bond content of 97.0 wt% or more, 97.5 wt% or more, 97.6 wt% or more, 97.9 wt% or more, 98.0 wt% or more, or 98.2 wt% or more, and 100.0 wt% or less, 99.5 wt% or less, or 99.0 wt% or less.

According to an embodiment of the present invention, the conjugated diene-based polymer may have a mooney viscosity (ML1+4, @100°C) of 30 or more, 35 or more, 40 or more, 42 or more, or 43 or more, and 70 or less, 60 or less, 50 or less, 48 or less, or 45 or less.

## Rubber composition

The present invention provides a rubber composition.

According to an embodiment of the present invention, the rubber composition may include the conjugated diene-based polymer. In a particular embodiment, the rubber composition may include the conjugated diene-based polymer in an amount of 0.1 wt% or more, 10 wt% or more, or 20 wt% or more, and 100 wt% or less, 95 wt% or less, or 90 wt% or less. Within this range, the abrasion resistance and crack resistance of a molded product manufactured using the rubber composition, for example, a tire, may be sufficiently secured.

According to an embodiment of the present invention, the rubber composition may further include other rubber components in addition to the conjugated diene-based polymer, as necessary. In this case, the rubber components may be included in an amount of 90 wt% or less with respect to the total weight of the rubber composition. Particularly, the rubber components may be included in an amount of 1 part by weight to 900 parts by weight with respect to 100 parts by weight of the conjugated diene-based copolymer.

According to an embodiment of the present invention, the rubber component may be a natural rubber or a synthetic rubber, for example, a natural rubber (NR) including cis-1,4-polyisoprene; a modified natural rubber which is obtained by modifying or purifying a common natural rubber, such as an epoxidized natural rubber (ENR), a deproteinized natural rubber (DPNR), and a hydrogenated natural rubber; and a synthetic rubber such as a styrene-butadiene copolymer (SBR), a polybutadiene (BR), a polyisoprene (IR), a butyl rubber (IIR), an ethylene-propylene copolymer, a polyisobutylene-co-isoprene, a neoprene, a poly(ethylene-co-propylene), a poly(styrene-co-butadiene), a poly(styrene-co-isoprene), a poly(styrene-co-isoprene-co-butadiene), a poly(isoprene-co-butadiene), a poly(ethylene-co-propylene-co-diene), a polysulfide rubber, an acryl rubber, a urethane rubber, a silicone rubber, an epichlorohydrin rubber, and a halogenated butyl rubber, and any one or a mixture of two or more thereof may be used.

According to an embodiment of the present invention, the rubber composition may include 20 parts by weight to 90 parts by weight of a filler with respect to 100 parts by weight of the conjugated diene-based polymer, and the filler may be a silica-based filler, a carbon black-based filler or a combination thereof. Particularly, the filler may be a carbon black-based filler.

According to an embodiment of the present invention, the carbon black-based filler may have a nitrogen adsorption specific surface area of 20 $m^2/g$ to 250 $m^2/g$ (measured based on N2SA, JIS K 6217-2:2001). Within this range, the processability of the rubber composition may be excellent, and reinforcing performance by the filler may be sufficiently secured. In addition, the carbon black-based filler may have a dibutylphthalate oil absorption amount (DBP) of 80 cc/100 g to 200 cc/100 g. Within this range, the processability of the rubber composition may be excellent, and reinforcing performance by the filler may be sufficiently secured.

According to an embodiment of the present invention, the silica-based filler may include wet silica (hydrated silica), dry silica (anhydrous silicate), calcium silicate, aluminum silicate or colloid silica. Particularly, the silica-based filler may be wet silica which has the most remarkable compatibility effect of the improving effect of destruction characteristics and wet grip. In addition, the silica-based filler may have nitrogen absorption specific surface area (nitrogen surface area per gram, N2SA) of 120 $m^2/g$ to 180 $m^2/g$, and cetyl trimethyl ammonium bromide (CTAB) absorption specific surface area of 100 $m^2/g$ to 200 $m^2/g$. Within this range, the processability of the rubber composition may be excellent, and reinforcing performance by the filler may be sufficiently secured.

According to an embodiment of the present invention, if the silica-based filler is used as the filler, a silane coupling agent may be used together for the improvement of reinforcing and low exothermic properties. The silane coupling agent may include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, or dimethoxymethylsilylpropylbenzothiazolylt etrasulfide. In a particular embodiment, the silane coupling agent may be bis(3-triethoxysilylpropyl)polysulfide or 3-trimethoxysilylpropylbenzothiazyltetrasulfide in consideration of the improving effect of reinforcing properties.

According to an embodiment of the present invention, the rubber composition may be sulfur crosslinkable, and so may further include a vulcanizing agent. The vulcanizing agent may particularly be a sulfur powder and may be included in an amount of 0.1 parts by weight to 10 parts by weight with respect to 100 parts by weight of the rubber component. Within this range, elasticity and strength required for a vulcanized rubber composition may be secured, and at the same time, a low fuel consumption ratio may be attained.

According to an embodiment of the present invention, the rubber composition may further include various additives used in a common rubber industry in addition to the above components, particularly, a vulcanization accelerator, a process oil, a plasticizer, an antiaging agent, a scorch preventing agent, a zinc white, stearic acid, a thermosetting resin, a thermoplastic resin, or the like.

According to an embodiment of the present invention, the vulcanization accelerator is not specifically limited, and may particularly include thiazole-based compounds such as 2-mercaptobenzothiazole (M), dibenzothiazyldisulfide (DM), and N-cyclohexyl-2-benzothiazylsulfenamide (CZ), or guanidine-based compounds such as diphenylguanidine (DPG). The vulcanization accelerator may be included in an amount of 0.1 parts by weight to 5 parts by weight with respect to 100 parts by weight of the rubber component.

According to an embodiment of the present invention, the process oil acts as a softener in a rubber composition and may particularly include a paraffin-based, naphthene-based, or aromatic compound. More particularly, an aromatic process oil may be used in consideration of tensile strength and abrasion resistance, and a naphthene-based or paraffin-based process oil may be used in consideration of hysteresis loss and properties at low temperature. The process oil may be included in an amount of 100 parts by weight or less with respect to 100 parts by weight of the rubber component. Within this range, the deterioration of the tensile strength and low exothermic properties (low fuel consumption ratio) of a vulcanized rubber may be prevented.

According to an embodiment of the present invention, the antiaging agent may include N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a condensate of diphenylamine and acetone at a high temperature. The antiaging agent may be used in an amount of 0.1 parts by weight to 6 parts by weight with respect to 100 parts by weight of the rubber component.

According to an embodiment of the present invention, the rubber composition may be obtained by mulling using a mulling apparatus such as a banbury mixer, a roll, and an internal mixer according to a mixing prescription. In addition, a rubber composition having low exothermic properties and excellent abrasion resistance may be obtained by a vulcanization process after a molding process.

According to an embodiment of the present invention, the rubber composition may be useful to the manufacture of each member of a tire such as a tire tread, an under tread, a side wall, a carcass coating rubber, a belt coating rubber, a bead filler, a chafer, and a bead coating rubber, or to the manufacture of rubber products in various industries such as a vibration-proof rubber, a belt conveyor, and a hose. In a particular embodiment, the molded product manufactured using the rubber composition may include tire or tire tread.

Hereinafter, embodiments of the present invention will be explained in detail so that a person skilled in the art may easily perform. However, embodiments according to the present invention may be modified in various other types, and should not be limited to the embodiments described below.

## Examples and Comparative Examples

### Example 1

To a reactor, 2.1 g of 1,3-butadiene diluted by 4.5 wt% in n-hexane was injected, and 0.6 g of neodymium versatate (Solvay Co.) diluted by 40 wt% in n-hexane was injected. Then, triethyl aluminum was injected into the reactor in an amount of 10 mol of the triethyl aluminum in contrast to 1 mol of neodymium at a temperature of 0°C, followed by stirring for 10 minutes. After that, diisobutyl aluminum hydride was injected into the reactor in an amount of 15 mol of the diisobutyl aluminum hydride in contrast to 1 mol of neodymium at a temperature of 0°C, followed by stirring for 30 minutes. Then, diethyl aluminum chloride was injected into the reactor in an amount of 3 mol of the diethyl aluminum chloride in contrast to 1 mol of neodymium at a temperature of -5°C, followed by stirring for 30 minutes to prepare a catalyst composition.

### Example 2

To a reactor, 2.1 g of 1,3-butadiene diluted by 4.5 wt% in n-hexane was injected, and 0.6 g of neodymium versatate (Solvay Co.) diluted by 40 wt% in n-hexane was injected. Then, triethyl aluminum was injected into the reactor in an amount of 10 mol of the triethyl aluminum in contrast to 1 mol of neodymium at a temperature of 0°C, followed by stirring for 10 minutes. After that, diisobutyl aluminum was injected into the reactor in an amount of 30 mol of the diisobutyl aluminum in contrast to 1 mol of neodymium at a temperature of 0°C, followed by stirring for 30 minutes. Then, diethyl aluminum chloride was injected into the reactor in an amount of 3 mol of the diethyl aluminum chloride in contrast to 1 mol of neodymium at a temperature of -5°C, followed by stirring for 30 minutes to prepare a catalyst composition.

### Example 3

To a reactor, 2.1 g of 1,3-butadiene diluted by 4.5 wt% in n-hexane was injected, and 0.6 g of neodymium versatate (Solvay Co.) diluted by 40 wt% in n-hexane was injected. Then, triethyl aluminum was injected into the reactor in an amount of 20 mol of the triethyl aluminum in contrast to 1 mol of neodymium at a temperature of 0°C, followed by stirring for 10 minutes. After that, diisobutyl aluminum hydride was injected into the reactor in an amount of 15 mol of the diisobutyl aluminum hydride in contrast to 1 mol of neodymium at a temperature of 0°C, followed by stirring for 30 minutes. Then, diethyl aluminum chloride was injected into the reactor in an amount of 3 mol of the diethyl aluminum chloride in contrast to 1 mol of neodymium at a temperature of -5°C, followed by stirring for 30 minutes to prepare a catalyst composition.

### Example 4

To a reactor, 2.1 g of 1,3-butadiene diluted by 4.5 wt% in n-hexane was injected, and 0.6 g of neodymium versatate (Solvay Co.) diluted by 40 wt% in n-hexane was injected. Then, triethyl aluminum was injected into the reactor in an amount of 10 mol of the triethyl aluminum in contrast to 1 mol of neodymium at a temperature of 0°C, followed by stirring for 10 minutes. After that, diisobutyl aluminum hydride was injected into the reactor in an amount of 15 mol of the diisobutyl aluminum hydride in contrast to 1 mol of neodymium at a temperature of 0°C, followed by stirring for 30 minutes. Then, ethyl aluminum sesquichloride was injected into the reactor in an amount of 2 mol of the ethyl aluminum sesquichloride in contrast to 1 mol of neodymium at a temperature of -5°C, followed by stirring for 30 minutes to prepare a catalyst composition.

### Comparative Example 1

To a reactor, 2.1 g of 1,3-butadiene diluted by 4.5 wt% in n-hexane was injected, and 0.6 g of neodymium versatate (Solvay Co.) diluted by 40 wt% in n-hexane was injected. Then, diisobutyl aluminum hydride was injected into the reactor in an amount of 15 mol of the diisobutyl aluminum hydride in contrast to 1 mol of neodymium at a temperature of 0°C, followed by stirring for 30 minutes. Then, diethyl aluminum chloride was injected into the reactor in an amount of 3 mol

of the diethyl aluminum chloride in contrast to 1 mol of neodymium at a temperature of 0°C, followed by stirring for 30 minutes to prepare a catalyst composition.

**Comparative Example 2**

To a reactor, 2.1 g of 1,3-butadiene diluted by 4.5 wt% in n-hexane was injected, and 0.6 g of neodymium versatate (Solvay Co.) diluted by 40 wt% in n-hexane was injected. Then, triisobutyl aluminum was injected into the reactor in an amount of 30 mol of the triisobutyl aluminum in contrast to 1 mol of neodymium at a temperature of 0°C, followed by stirring for 30 minutes. Then, diethyl aluminum chloride was injected into the reactor in an amount of 3 mol of the diethyl aluminum chloride in contrast to 1 mol of neodymium at a temperature of -5°C, followed by stirring for 30 minutes to prepare a catalyst composition.

**Comparative Example 3**

To a reactor, 2.1 g of 1,3-butadiene diluted by 4.5 wt% in n-hexane was injected, and 0.6 g of neodymium versatate (Solvay Co.) diluted by 40 wt% in n-hexane was injected. Then, triethyl aluminum and diisobutyl aluminum hydride were injected into the reactor in an amount of 10 mol of the triethyl aluminum and 15 mol of the diisobutyl aluminum hydride, in contrast to 1 mol of neodymium at a temperature of 0°C, followed by stirring for 30 minutes. Then, diethyl aluminum chloride was injected into the reactor in an amount of 3 mol of the diethyl aluminum chloride in contrast to 1 mol of neodymium at a temperature of 0°C, followed by stirring for 30 minutes to prepare a catalyst composition.

**Experimental Examples**

**Experimental Example 1: Preparation of conjugated diene-based polymer and evaluation of catalyst composition activity**

To a 20 L, autoclave reactor, 500 g of 1,3-butadiene and 4.2 kg of n-hexane were injected, and the internal temperature of the reactor was raised to 70°C. To the reactor, if the catalyst compositions prepared in Examples 1 to 4 were used, 0.01 g of diisobutyl aluminum hydride as a molecular weight adjusting agent, or if the catalyst compositions prepared in Comparative Examples 1 to 3 were used, 0.25 g of diisobutyl aluminum hydride as a molecular weight adjusting agent, was added, and then, each of the catalyst compositions prepared in Examples 1 to 4 and Comparative Examples 1 to 3 was injected, followed by polymerizing. At a point where a polymerization conversion ratio reached 98% or more, a n-hexane solution including 1.0 g of a polymerization inhibitor and a n-hexane solution in which 30 wt% of Irganox 1520 antioxidant (BASF) was dissolved were added to quench the reaction, and the polymer thus obtained was put in hot water heated with steam and stirred to remove the solvent. The resultant was roll-dried to remove remaining solvent and water to prepare a butadiene polymer.

During preparing the butadiene polymer, a portion of a polymerization solution was taken after 25 minutes of the reaction time from the initiation point of polymerization, the total solid content (TSC, %) was measured, and a polymerization conversion ratio was calculated according to Mathematical Equation 1 below. The polymerization conversion ratio after 25 minutes of the reaction time was measured for each of the catalyst compositions of Examples 1 to 4 and Comparative Examples 1 to 3, and catalyst composition activity was evaluated and shown in Table 1. Based on the measurement value of Comparative Example 1 as a reference value, the catalyst composition activities for the Examples and Comparative Examples were indexed using Mathematical Equation 2.

In addition, the shape of the catalyst compositions prepared in Examples 1 to 4 and Comparative Examples 1 to 3 was evaluated with the naked eye, and the shape is shown together in Table 1.

Polymerization conversion ratio (%) = TSC of sample (%)/concentration of 1,3-butadiene injected (wt%) [Mathematical Equation 1]

Activity index = (measurement value/reference value) x 100 [Mathematical Equation 2]

[Table 1]

| Division | Exam ple 1 | Exam ple 2 | Exam ple 3 | Exa mpl e 4 | Compar ative Exampl e 1 | Compar ative Exampl e 2 | Compar ative Exampl e 3 |
|---|---|---|---|---|---|---|---|
| Catalyst solution shape | Clea r liqu id | Clea r liqu id | Clea r liqu id | Cle ar liq uid | Clear liquid | Opaque slurry | Clear liquid |
| Activity (25 minute polymerizatio n conversion ratio, %) | 90 | 87 | 88 | 89 | 55 | 45 | 79 |
| Activity index (%) | 164 | 158 | 160 | 165 | 100 | 82 | 144 |

As shown in Table 1, the catalyst compositions prepared in Examples 1 to 4 showed the catalyst solution shape of clear liquid phase, and the preparation of the catalyst compositions could be confirmed. It could be confirmed that the activity of the catalyst compositions was very high in contrast to Comparative Examples 1 to 3.

In contrast, in Comparative Example 1 not performing a pre-treatment step using triethyl aluminum with respect to a lanthanide rare earth element compound according to the present invention, it could be confirmed that the activity of the catalyst composition was degraded in contrast to Example 1 using the same alkylating agent and halogen compound.

In addition, in Comparative Example 2 not performing a pre-treatment step using triethyl aluminum with respect to a lanthanide rare earth element compound according to the present invention, it could be confirmed that the activity of the catalyst composition was degraded in contrast to Example 2 using the same alkylating agent and halogen compound.

In addition, in Comparative Example 3 not performing a pre-treatment step using triethyl aluminum with respect to a lanthanide rare earth element compound according to the present invention and using triethyl aluminum as an alkylating agent, it could be confirmed that a catalyst composition was prepared, but the activity of the catalyst composition was insufficiently improved in contrast to Examples 1 to 4.

**Experimental Example 2: Evaluation of physical properties of conjugated diene-based polymer**

For the conjugated diene-based polymers prepared in Experimental Example 1 using the catalyst compositions of Examples 1 to 4 and Comparative Examples 1 to 3, mooney viscosity, molecular weight distribution and the cis-1,4 bond content were measured and shown in Table 2 below.

* Mooney viscosity (ML1+4, @100°C): Mooney viscosity was measured using Large Rotor of MV2000E of Monsanto Co., at a rotor speed of 2 ± 0.02 rpm at 100°C, for each polymer. In this case, a specimen used was stood at room temperature (23 ± 3°C) for 30 minutes or more, 27 ± 3 g of the specimen was taken and put in a die cavity, and measurement was conducted while applying torque by operating a platen.
* Weight average molecular weight (Mw), number average molecular weight (Mn), and molecular weight distribution (MWD): Each polymer was dissolved in tetrahydrofuran (THF) under 40°C conditions for 30 minutes and loaded and flown on gel permeation chromatography (GPC). In this case, two columns of PLgel Olexis (product name) and one column of PLgel mixed-C of Polymer laboratories Co. were used in combination. In addition, newly replaced columns were all mixed bed type columns, and polystyrene was used as a GPC standard material.
* Cis-1,4 bond content: The cis-1,4 bond content of a conjugated diene moiety was measured by Fourier-transform infrared spectroscopy (FT-IR). Particularly, FT-IR transmission spectrum of the carbon disulfide solution of the conjugated diene-based polymer prepared in a concentration of 5 mg/mL was measured with carbon disulfide of the same cell as a blank, and each content was obtained using the maximum peak value around 1130 $cm^{-1}$ (a, base line), the minimum peak value around 967 $cm^{-1}$ showing a trans-1,4 bond (b), the minimum peak value around 911 $cm^{-1}$ showing a vinyl bond (c), and the minimum peak value around 736 $cm^{-1}$ showing a cis-1,4 bond (d) of the measured spectrum.

[Table 2]

| Division | Exam ple 1 | Exam ple 2 | Exam ple 3 | Exam ple 4 | Compar ative Exampl e 1 | Compar ative Exampl e 2 | Compar ative Exampl e 3 |
|---|---|---|---|---|---|---|---|
| Mooney viscosity (MU) | 43 | 45 | 40 | 44 | 45 | 48 | 32 |
| Molecular weight | 2.3 | 2.4 | 2.3 | 2.4 | 3.0 | 3.1 | 3.0 |

(continued)

| Division | Exam ple 1 | Exam ple 2 | Exam ple 3 | Exam ple 4 | Compar ative Exampl e 1 | Compar ative Exampl e 2 | Compar ative Exampl e 3 |
|---|---|---|---|---|---|---|---|
| distribution | | | | | | | |
| Cis-1,4 bond content (wt%) | 98.2 | 97.9 | 96.5 | 98.2 | 97.5 | 97.1 | 96.2 |

As shown in Table 2, it could be confirmed that the conjugated diene-based polymers prepared using the catalyst compositions prepared in Examples 1 to 4 showed suitable levels of mooney viscosity and molecular weight distribution, while securing the high level of the cis-1,4 bond content. Particularly, it could be confirmed that the conjugated diene-based polymers prepared using the catalyst compositions prepared in Examples 1, 2 and 4 showed excellent mooney viscosity, molecular weight distribution and cis-1,4 bond content overall.

On the contrary, the conjugated diene-based polymers prepared using the catalyst compositions prepared in Comparative Examples 1 to 3 showed broad molecular weight distribution and degraded cis-1,4 bond content in contrast to Examples 1, 2 and 4. Particularly, it could be confirmed that the conjugated diene-based polymer prepared using the catalyst composition prepared in Comparative Examples 3 showed degraded cis-1,4 bond content in contrast to Examples 1 to 4, as well as broad molecular weight distribution and a very low level of mooney viscosity.

**Experimental Example 3: Evaluation of physical properties of rubber composition**

By using the conjugated diene-based polymers prepared in Experimental Example 1 using the catalyst compositions of Examples 1 to 4 and Comparative Examples 1 to 3, rubber compositions and rubber specimens were prepared, and mooney viscosity, abrasion resistance, tensile properties and viscoelasticity properties were measured by the methods below and shown in Table 3 below.

<Preparation of rubber compositions and rubber specimens>

With respect to 100 parts by weight of each of the conjugated diene-based polymers prepared in Experimental Example 1 using the catalyst compositions of Examples 1 to 4 and Comparative Examples 1 to 3, 70 parts by weight of carbon black, 22.5 parts by weight of a process oil (TDAE oil), 2 parts by weight of an antiaging agent (TMDQ), 3 parts by weight of zinc oxide (ZnO), and 2 parts by weight of stearic acid were mixed.

Then, to each rubber composition, 2 parts by weight of sulfur, 2 parts by weight of a vulcanization accelerator (CZ) and 0.5 parts by weight of a vulcanization accelerator (DPG) were added, and the resultant was gently mixed at 50°C for 1 minute and 30 seconds at 50 rpm, and a vulcanized mixture compound in a sheet shape was formed using a roll of 50°C. The vulcanized mixture compound was vulcanized at 160°C for 25 minutes to form a rubber specimen.

* Tensile properties: After vulcanizing each rubber composition prepared at 150°C for t90 minutes, based on ASTM D412, modulus when extended by 300% (M-300%, kg·f/cm$^2$) of the vulcanized product was measured. 300% modulus of the Examples and Comparative Examples were indexed based on the measurement value of Comparative Example 1 as a reference value by using Mathematical Equation 3.

[Mathematical Equation 3]

$$\text{M-300\% index} = (\text{measurement value}/\text{reference value}) \times 100$$

* Viscoelasticity properties: The coefficient of viscoelasticity properties (tan $\delta$) at -60°C to 60°C was measured using a DMTS 500N of GABO Co. (Germany) with a frequency of 10 Hz, prestrain 3%, and dynamic strain 3%. In this case, a tan $\delta$ value at 0°C represents skid resistance, and a tan $\delta$ value at 60°C represents rolling resistance (fuel consumption ratio). Viscoelasticity properties of the Examples and Comparative Examples were indexed based on the measurement value of Comparative Example 1 as a reference value by using Mathematical Equation 4.

$$\text{Tan } \delta \text{ 60°C Index} = (\text{reference value}/\text{measurement value}) \times 100 \quad \text{[Mathematical Equation 4]}$$

* Abrasion resistance: A DIN abrasion test was performed based on ASTM D5963 for each of the rubber specimens formed, and shown as a DIN wt loss index (loss volume index: abrasion resistance index (ARIA, Method A)). The

abrasion resistances of the Examples and Comparative Examples were indexed based on the measurement value of Comparative Example 1 as a reference value by using Mathematical Equation 5.

Abrasion amount index = (reference value/measurement value) x 100 [Mathematical Equation 5]

[Table 3]

| Division | | Example 1 | Example 2 | Example 3 | Example 4 | Comparative Example 1 | Comparative Example 2 | Comparative Example 3 |
|---|---|---|---|---|---|---|---|---|
| Tensile properties | M-300% ($kg \cdot f/cm^2$) | 89 | 87 | 86 | 87 | 80 | 79 | 81 |
| | M-300% index (%) | 111 | 109 | 108 | 109 | 100 | 99 | 101 |
| Viscoelasticity properties | Tan δ 60°C | 0.155 | 0.158 | 0.157 | 0.158 | 0.171 | 0.175 | 0.168 |
| | Tan δ 60°C index (%) | 110 | 108 | 109 | 108 | 100 | 98 | 102 |
| Abrasion resistance | Abrasion amount (mg) | 19.7 | 20.7 | 20.1 | 21.0 | 21.5 | 22.1 | 21.0 |
| | Abrasion amount index (%) | 109 | 104 | 107 | 102 | 100 | 97 | 102 |

As shown in Table 3, it could be confirmed that the rubber compositions prepared by including the conjugated diene-based polymers prepared using the catalyst compositions prepared in Examples 1 to 4 showed improved tensile properties, viscoelasticity properties and abrasion resistance in contrast to the rubber composition prepared by including the conjugated diene-based polymer prepared by using the catalyst composition prepared in Comparative Example 1.

In contrast, it could be confirmed that the rubber composition prepared by including the conjugated diene-based polymer prepared by using the catalyst composition prepared in Comparative Example 2 showed degraded tensile properties, viscoelasticity properties and abrasion resistance in contrast to the rubber composition prepared by including the conjugated diene-based polymer prepared by using the catalyst composition prepared in Comparative Example 1.

In addition, it could be confirmed that the rubber composition prepared by including the conjugated diene-based polymer prepared by using the catalyst composition prepared in Comparative Example 3 showed insignificant improvement and the same levels of tensile properties, viscoelasticity properties and abrasion resistance in contrast to the rubber composition prepared by including the conjugated diene-based polymer prepared by using the catalyst composition prepared in Comparative Example 1.

Such results were obtained due to improved catalyst activity through the pre-treatment of a hydrogen-bonded lanthanide rare earth element compound and/or an oligomer type of a lanthanide rare earth element compound, which induce the deterioration of catalyst activity, prior to alkylation during preparing a catalyst composition for preparing a conjugated diene-based polymer.

From the results, it could be confirmed that the catalyst composition prepared according to the method for preparing a catalyst composition of the present invention shows excellent catalyst activity through the pre-treatment of a hydrogen-bonded lanthanide rare earth element compound and/or an oligomer type of a lanthanide rare earth element compound, which induce the deterioration of catalyst activity, prior to alkylation.

In addition, it could be confirmed that the conjugated diene-based polymer prepared according to the method for preparing a conjugated diene-based polymer of the present invention has the small content of the lantanide rare earth element remaining in the conjugated diene-based polymer, high cis bond content and linearity, and narrow molecular weight distribution due to high catalyst activity, and if applied to a rubber composition, shows excellent abrasion resistance and a low fuel consumption.

## Claims

1. A method for preparing a catalyst composition, the method comprising:

   a step of performing pre-treatment reaction of a hydrogen bond, an oligomer type, or a combination thereof on a lanthanide rare earth element compound (S10);
   a step of alkylation of mixing and reacting the lanthanide rare earth element compound of which the hydrogen bond, the oligomer type, or the combination thereof is pretreated in step (S10), with an alkylating agent (S20); and
   a step of halogenation of mixing and reacting the alkylated lanthanide rare earth element compound in step (S20), with a halogen compound (S30).

2. The method for preparing a catalyst composition according to claim 1, wherein the step (S10) is performed by mixing and reacting the lanthanide rare earth element compound, with one or more trialkyl aluminums selected from the group consisting of trimethyl aluminum and triethyl aluminum.

3. The method for preparing a catalyst composition according to claim 2, wherein the step (S10) is performed before the alkylation of the lanthanide rare earth element compound by the trialkyl aluminum occurs.

4. The method for preparing a catalyst composition according to claim 1, wherein the lanthanide rare earth element compound is a neodymium compound represented by the following Formula 1:

   [Formula 1]

   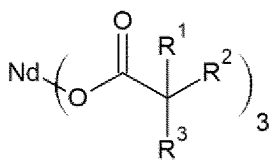

   in Formula 1,
   $R^1$ to $R^3$ are each independently hydrogen or an alkyl group of 1 to 12 carbon atoms, where $R^1$ to $R^3$ are not all hydrogen.

5. The method for preparing a catalyst composition according to claim 1, wherein the lanthanide rare earth element is one or more selected from the group consisting of $Nd(2\text{-ethyl hexanoate})_3$, $Nd(2,2\text{-dimethyl decanoate})_3$, $Nd(2,2\text{-diethyl decanoate})_3$, $Nd(2,2\text{-dipropyl decanoate})_3$, $Nd(2,2\text{-dibutyl decanoate})_3$, $Nd(2,2\text{-dihexyl decanoate})_3$, $Nd(2,2\text{-dioctyl decanoate})_3$, $Nd(2\text{-ethyl-2-propyl decanoate})_3$, $Nd(2\text{-ethyl-2-butyl decanoate})_3$, $Nd(2\text{-ethyl-2-hexyl decanoate})_3$, $Nd(2\text{-propyl-2-butyl decanoate})_3$, $Nd(2\text{-propyl-2-hexyl decanoate})_3$, $Nd(2\text{-propyl-2-isopropyl decanoate})_3$, $Nd(2\text{-butyl-2-hexyl decanoate})_3$, $Nd(2\text{-hexyl-2-octyl decanoate})_3$, $Nd(2,2\text{-diethyl octanoate})_3$, $Nd(2,2\text{-dipropyl octanoate})_3$, $Nd(2,2\text{-dibutyl octanoate})_3$, $Nd(2,2\text{-dihexyl octanoate})_3$, $Nd(2\text{-ethyl-2-propyl octanoate})_3$, $Nd(2\text{-ethyl-2-hexyl octanoate})_3$, $Nd(2,2\text{-diethyl nonanoate})_3$, $Nd(2,2\text{-dipropyl nonanoate})_3$, $Nd(2,2\text{-dibutyl nonanoate})_3$, $Nd(2,2\text{-dihexyl nonanoate})_3$, $Nd(2\text{-ethyl-2-propyl nonanoate})_3$, and $Nd(2\text{-ethyl-2-hexyl nonanoate})_3$.

6. The method for preparing a catalyst composition according to claim 1, wherein the alkylating agent is an alkyl aluminum compound represented by the following Formula 2:

   [Formula 2] $AlR^4R^5R^6$

   in Formula 2,
   $R^4$ to $R^6$ are each independently hydrogen or an alkyl group of 1 to 12 carbon atoms, where $R^4$ to $R^6$ are not all hydrogen, and if all of $R^4$ to $R^6$ are alkyl groups, the carbon number of the alkyl group is 3 to 12.

7. The method for preparing a catalyst composition according to claim 1, wherein the alkylating agent is a dialkyl aluminum hydride.

8. The method for preparing a catalyst composition according to claim 1, wherein the pre-treatment reaction in the step (S10), the alkylation in the step (S20), or the pre-treatment reaction in the step (S10) and the alkylation in the step (S20) are performed by including a conjugated diene-based monomer.

**9.** The method for preparing a catalyst composition according to claim 1, wherein the halogen compound is one or more selected from the group consisting of an alkyl aluminum halide represented by the following Formula 3 and an alkyl aluminum sesquihalide represented by the following Formula 4:

[Formula 3] $AlR^7R^8R^9$

in Formula 3,

$R^7$ to $R^9$ are each independently a halogen group or an alkyl group of 1 to 12 carbon atoms, where $R^7$ to $R^9$ are not all halogen groups,

[Formula 4]

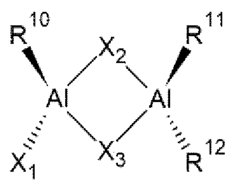

in Formula 4,
$R^{10}$ to $R^{12}$ are each independently an alkyl group of 1 to 12 carbon atoms, and
$X_1$ to $X_3$ are each independently a halogen group.

**10.** The method for preparing a catalyst composition according to claim 1, wherein the halogen compound is one or more selected from the group consisting of a dialkyl aluminum halide and an alkyl aluminum sesquihalide.

**11.** A method for preparing a conjugated diene-based polymer, the method comprising a step of polymerizing a conjugated diene-based monomer in the presence of the catalyst composition prepared by the method for preparing a catalyst composition according to claim 1, in a hydrocarbon solvent to prepare an active polymer (S100).

## INTERNATIONAL SEARCH REPORT

International application No.
**PCT/KR2023/002198**

### A. CLASSIFICATION OF SUBJECT MATTER

**C08F 36/04**(2006.01)i; **C08F 4/54**(2006.01)i; **C08F 2/38**(2006.01)i

According to International Patent Classification (IPC) or to both national classification and IPC

### B. FIELDS SEARCHED

Minimum documentation searched (classification system followed by classification symbols)

C08F 36/04(2006.01); C07F 5/00(2006.01); C08F 4/54(2006.01); C08F 4/602(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 란탄계(lanthanide, lanthanoid), 희토류(rare earth elements), 네오디뮴(neodymium, Nd), 수소결합(hydrogen bond), 올리고머(oligomer), 전처리(pretreatment), 알킬화제(alkylating agent), 할로겐화물(halide), 공액디엔(conjugation diene)

### C. DOCUMENTS CONSIDERED TO BE RELEVANT

| Category* | Citation of document, with indication, where appropriate, of the relevant passages | Relevant to claim No. |
|---|---|---|
| DX | JP 2006-274219 A (NIPPON ZEON CO., LTD.) 12 October 2006 (2006-10-12)<br>See claims 1-10; and paragraphs [0017]-[0019], [0027], [0033]-[0036], [0067], [0077] and [0078]. | 1-11 |
| X | RU 2203289 C1 (OTKRYTOE AKTSIONERNOE OBSHCHESTVO “VORONEZHSINTEZK”) 27 April 2003.<br>See abstract; page 4; and claims 1-6. | 1-11 |
| X | RU 2345092 C1 (FEDERAL`NOE GOSUDARSTVENNOE UNITARNOE PREDPRIJATIE "ORDENA LENINA I ORDENA TRUDOVOGO KRASNOGO ZNAMENI NAUCHNO-ISSLEDOVATEL`SKIJ INSTITUT SINTETICHESKOGO KAUCHUKA IMENI AKADEMIKA S.V. LEBEDEVA") 27 January 2009.<br>See abstract; pages 4 and 5; and claim 1. | 1-11 |
| A | ATIQULLAH, M. et al. Synthesis of functional polyolefins using metallocenes: a comprehensive review. Polymer reviews. 2010, vol. 50, pp. 178-230.<br>See pages 209-212. | 1-11 |

☑ Further documents are listed in the continuation of Box C. ☑ See patent family annex.

* Special categories of cited documents:
- “A” document defining the general state of the art which is not considered to be of particular relevance
- “D” document cited by the applicant in the international application
- “E” earlier application or patent but published on or after the international filing date
- “L” document which may throw doubts on priority claim(s) or which is cited to establish the publication date of another citation or other special reason (as specified)
- “O” document referring to an oral disclosure, use, exhibition or other means
- “P” document published prior to the international filing date but later than the priority date claimed
- “T” later document published after the international filing date or priority date and not in conflict with the application but cited to understand the principle or theory underlying the invention
- “X” document of particular relevance; the claimed invention cannot be considered novel or cannot be considered to involve an inventive step when the document is taken alone
- “Y” document of particular relevance; the claimed invention cannot be considered to involve an inventive step when the document is combined with one or more other such documents, such combination being obvious to a person skilled in the art
- “&” document member of the same patent family

| Date of the actual completion of the international search | Date of mailing of the international search report |
|---|---|
| **12 May 2023** | **12 May 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2023/002198**

**C. DOCUMENTS CONSIDERED TO BE RELEVANT**

| Category* | Citation of document, with indication, where appropriate, of the relevant passages | Relevant to claim No. |
|---|---|---|
| A | KR 10-2001-0100205 A (KOREA KUMHO PETROCHEMICAL CO., LTD.) 14 November 2001 (2001-11-14)<br>See claims 1-9. | 1-11 |

Form PCT/ISA/210 (second sheet) (July 2022)

**INTERNATIONAL SEARCH REPORT**
**Information on patent family members**

International application No.
**PCT/KR2023/002198**

| Patent document cited in search report | | | Publication date (day/month/year) | Patent family member(s) | | | Publication date (day/month/year) |
|---|---|---|---|---|---|---|---|
| JP | 2006-274219 | A | 12 October 2006 | JP | 5072191 | B2 | 14 November 2012 |
| RU | 2203289 | C1 | 27 April 2003 | None | | | |
| RU | 2345092 | C1 | 27 January 2009 | RU | 2007119220 | A | 27 November 2008 |
| KR | 10-2001-0100205 | A | 14 November 2001 | AT | 368689 | T | 15 August 2007 |
| | | | | AU | 7691600 | A | 24 September 2001 |
| | | | | DE | 60035769 | T2 | 30 April 2008 |
| | | | | EP | 1134233 | A1 | 19 September 2001 |
| | | | | EP | 1134233 | B1 | 01 August 2007 |
| | | | | JP | 2001-261683 | A | 26 September 2001 |
| | | | | JP | 3828340 | B2 | 04 October 2006 |
| | | | | KR | 10-0384813 | B1 | 22 May 2003 |
| | | | | TW | I224601 | B | 01 December 2004 |
| | | | | US | 2002-0173606 | A1 | 21 November 2002 |
| | | | | US | 6482930 | B1 | 19 November 2002 |
| | | | | US | 6506865 | B2 | 14 January 2003 |
| | | | | WO | 01-68716 | A2 | 20 September 2001 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220021074
- US 9056303 B
- JP 5072191 B
- US 9056303 B2


### Non-patent literature cited in the description


- A Highly Reactive and Monomeric Neodymium Catalyst. *Macromolecules*, 2002, vol. 35 (13), 4875-4879, https://doi.org/10.1021/ma012123p
- Living and non-living Ziegler-Natta catalysts: electronic properties of active site. *Polymer*, October 2003, vol. 44 (21), 6555-6558, https://doi.org/10.1016/S0032-3861(03)00698-0